# DEMANDE DE BREVET EUROPEEN

(11) **EP 3 671 564 A1**
(43) Date de publication de la demande: **24.06.2020**
(21) Numéro de dépôt: 18306797.4
(22) Date de dépôt: 21.12.2018
(51) Int. Cl.: G06K 19/077, H01Q 1/22

(54) **PROCEDE DE FABRICATION D'UN INSERT DE CARTE A PUCE RADIOFREQUENCE COMPORTANT UNE PLAQUE METALLIQUE**

(71) Demandeur: Thales Dis France SA, 92190 Meudon (FR)
(72) Inventeur: MENDEZ, Lucile, 13881 Gémenos Cedex (FR); COLOMBARD, Claude, 13881 Gémenos Cedex (FR); Frederick, SEBAN, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Milharo, Emilien

(57) **Abrégé**

L'invention concerne procédé de fabrication d'un insert métallique (1A, 1B) pour carte à puce radiofréquence, ledit procédé comprenant les étapes de :
- fourniture d'au moins une plaque de métal (2, 2p) découpée en forme de boucle d'antenne et présentant une ouverture (11, 12) dans une zone de réception d'un module radiofréquence (Ml, M2),
caractérisé en ce qu'il comprend les étapes suivantes :
- réalisation de deux extrémités terminales d'interconnexion (4, 5, 18, 19) dans ladite plaque (2) configurées pour connecter un module radiofréquence (Ml, M2) ou un circuit d'antenne complémentaire (8, 16),
- connexion capacitive et/ou ohmique dudit module radiofréquence (Ml, M2) aux extrémités terminales de ladite boucle d'antenne.

L'invention concerne également une carte correspondante obtenue par le procédé.

## Description

### Domaine de l'invention.

L'invention concerne le domaine des cartes à puce sans-contact comportant une forte teneur métallique ou comportant une plaque métallique pouvant s'étendre de préférence jusqu'à au moins un bord de la carte.

Les cartes à puce peuvent être du type hybride (contacts et sans-contact) ou purement sans-contact (sans bornier de contacts électriques 5). La plaque est en principe comprise dans un insert recouvert par au moins une feuille ou film de couverture externe.

Les cartes à puce peuvent avoir un module de carte à puce comportant un transpondeur (ou puce) radiofréquence (avec la puce et l'antenne) portée sur un substrat isolant du module. Les modules de carte à puce radiofréquence sont généralement encartés dans une cavité du corps de carte. Ils peuvent aussi connecter une antenne logée dans le corps de carte via des éléments d'interconnexion électriques, reliant des plages terminales de l'antenne à des zones de connexion de la puce placées sur le module.

Un module radiofréquence de carte à puce peut être couplé avec une antenne passive ou relais logée dans le corps de carte.

L'invention vise plus particulièrement les cartes métalliques bancaires, de paiement, de transport.

### Art antérieur

Le brevet FR 2743649 décrit un module de carte à puce à antenne et /ou plages de contact pouvant être incorporé dans une cavité de corps de carte ou pouvant former une étiquette électronique RFID.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel de l'aluminium, du titane, de l'or. Le métal procure une sensation de lourdeur de la carte qui est très appréciée par les utilisateurs. Il donne aussi un aspect esthétique visible qui en fait un produit haut de gamme pour privilégiés.

La demande de brevet US2015/0269477 A1 décrit une carte à puce métallique de type « booster » comportant une plaque de métal, une cavité de réception d'un module à antenne, avec puce radiofréquence. La plaque forme une boucle ouverte qui contribue à la communication du module antenne.

Il y a actuellement une forte demande pour ce genre de carte à puce intégrant des matières lourdes mais la fabrication n'est pas aisée ou le rapport poids / performance de communication radiofréquence n'est pas optimal.

### Problème technique.

L'invention vise à résoudre les inconvénients précités.

En particulier, l'invention vise une structure de module à puce électronique pour carte à puce qui permette d'avoir de bonnes performances radiofréquences RF carte dans toutes les directions, même si la carte contient un maximum de métal à l'intérieur ou au-dessus ou sur le bord ou périphérie de la carte.

La carte doit de préférence également avoir une structure satisfaisant les contraintes de tenue mécanique en terme de standard ISO des cartes à puce autres tests notamment de durabilité dans le temps.

### Résumé de l'invention.

L'invention consiste selon un aspect préféré à avoir des cartes à puce métalliques les plus lourdes possibles tout en ayant de bonnes performances radiofréquence.

L'invention consiste à former la plaque métallique sous forme de spire d'antenne avec le moins de découpe possible ou de perte de métal possible et de compléter la boucle avec d'autres spires complémentaires, si nécessaire.

A cet effet, l'invention a pour objet un procédé de fabrication d'un insert métallique pour carte à puce radiofréquence, ledit procédé comprenant les étapes de :
- fourniture ou réalisation d'au moins une plaque de métal en forme de boucle d'antenne et présentant une ouverture dans une zone de réception d'un module radiofréquence,
caractérisé en ce qu'il comprend les étapes suivantes :
- réalisation dans ladite plaque, de deux extrémités terminales d'interconnexion configurées pour connecter un module radiofréquence ou un circuit d'antenne complémentaire,
- connexion capacitive et/ou ohmique dudit module radiofréquence aux extrémités terminales de ladite boucle d'antenne.

Ainsi, l'invention permet une carte lourde métallique facile à fabriquer et ayant de bonnes performances de communication radiofréquence.

Selon d'autres caractéristiques du procédé :
- Il comprend une étape de formation d'au moins une spire d'antenne prolongeant au moins ladite boucle ;
- Au moins une spire peut être formée sur un substrat de module de carte à puce radiofréquence de type standard (ou classique) ou peut être formée sur une feuille isolante assemblée à ladite plaque de métal;
- Un module de carte à puce radiofréquence peut être encarté dans une cavité ménagée au-dessus ou en regard d'au moins une partie du circuit d'antenne complémentaire, pour être connecté de manière ohmique, capacitive, ou inductive à l'antenne complémentaire.
- La boucle d'antenne ménagée dans la plaque peut comprendre au moins une fente dans la plaque métallique, débouchant dans l'ouverture de plaque et s'étendant que partiellement sur la largeur de la boucle sans déboucher au-delà de la périphérie de la plaque. La fente est réductrice de la largeur ou de la section de la boucle, et se maintient en retrait du bord périphérique de la plaque ou de la boucle)

L'invention a également pour objet un insert métallique pour carte à puce radiofréquence, comprenant:
- au moins une plaque de métal en forme de boucle d'antenne et présentant une ouverture dans une zone de réception d'un module radiofréquence ; Il est caractérisé en ce qu'il comprend deux extrémités terminales d'interconnexion, réalisées dans ladite plaque et configurées pour connecter ou connectant un module radiofréquence ou un circuit d'antenne complémentaire par connexion capacitive et/ou ohmique.

Selon d'autres caractéristiques :
- L'insert comprend au moins une spire d'antenne prolongeant au moins ladite boucle ;
- Ladite au moins une spire est formée sur un substrat de module à puce radiofréquence standard de carte à puce ou sur une feuille isolante assemblée à ladite plaque de métal ;
- L'insert (ou la carte comportant l'insert) comprend un module de carte à puce radiofréquence encarté dans une cavité ménagée au-dessus ou en regard d'au moins une partie du circuit d'antenne complémentaire et est connecté de manière ohmique, capacitive, ou inductive à l'antenne complémentaire ;
- L'insert comprend ladite boucle d'antenne de plaque comprend au moins une fente formée dans la plaque métallique, débouchant dans l'ouverture de plaque et s'étendant que partiellement sur la largeur de la boucle sans déboucher au-delà de la périphérie de la plaque.

### Descriptif des figures :

- La figure 1 illustre un premier insert de carte à puce en cours de réalisation conformément à un premier mode de réalisation l'invention ;
- La figure 2 illustre un second insert de carte à puce en cours de réalisation conformément à un second mode de réalisation l'invention ;
- La figure 3A illustre une coupe de la figure 4A ci-dessous selon A-A ;
- La figure 3B illustre un troisième insert de carte à puce (ou carte) en cours de réalisation conformément à un troisième mode préféré de réalisation l'invention ;
- La figure 4 illustre des étapes du procédé de l'invention selon un mode préféré.

### Description.

Dans la description, des mêmes références utilisées d'une figure à l'autre représentent des éléments identiques ou similaires.

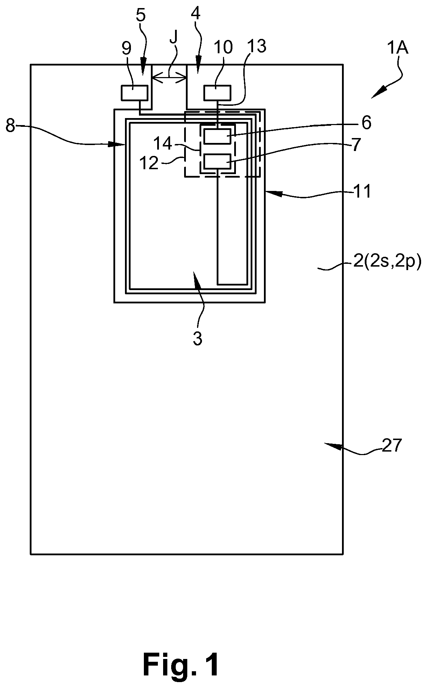

A la figure 1, est illustré un premier insert métallique, pour carte à puce 1A radiofréquence, en cours de réalisation, conformément à des étapes d'un premier mode de réalisation ou de mise en oeuvre du procédé de l'invention.

Selon une caractéristique de ce mode, le procédé peut comprendre des étapes de fourniture d'au moins une plaque de métal découpée en forme de boucle d'antenne et présentant une découpe dans une zone de réception d'un module radiofréquence.

Dans l'exemple, ce mode peut prévoit de fournir une plaque de métal 2 ayant un format égal à celui d'une carte à puce ou de préférence une pluralité de plaques métallique de grandes dimensions à partir desquelles seront extraits les inserts ultérieurement découpées. Tout métal peut être utilisé parmi notamment l'acier, l'or, le tungstène, l'aluminium ou des alliages de métaux.

L'épaisseur de la plaque peut correspondre à l'épaisseur finale d'une carte standard soit 0,76 mm. L'épaisseur de la plaque 2 peut aussi s'obtenir en retranchant à cette épaisseur de 0,76 mm les épaisseurs des couches finales de recouvrement et/ou de décoration à laminer par-dessus. Par exemple, l'épaisseur de la plaque peut être variable en fonction des cas de figure, par exemple, elle peut être environ de 400 à 700 µm pour un assemblage avec d'autres feuilles ou couches isolantes ou métalliques.

La plaque 2 peut être formée de plusieurs plaques ou couches métalliques. Par exemple, la plaque 2 peut comprendre des couches de matière précieuse (or, argent) fixées en feuille ou en plaquage ou par déposition électrochimique comme par exemple des traitements de surface des plages de contact de module de carte à puce.

Chaque plaque 2 comprend une fente J, traversant l'épaisseur de la plaque qui se situe en bordure de la plaque et qui peut correspondre au petit côté de la carte à puce à proximité d'un emplacement de module M1 (non illustré) de carte à puce.

La plaque 2 présente également une ouverture 11, également traversant l'épaisseur de la plaque 2, et positionnée aux environs de l'emplacement d'un module de carte à puce. L'ouverture 11 communique ici avec la fente J.

Selon une caractéristique de ce premier mode, le procédé comprend l'étape de réalisation de deux extrémités terminales d'interconnexion 4, 5 destinées à connecter un module radiofréquence M1.

Dans l'exemple, figure 1, on réalise les deux extrémités terminales d'interconnexion 4, 5 de la plaque 2 en bordure de la fente J. La plaque comporte des portions continues de largeur inégales qui contournent la cavité 11 d'une extrémité 4 à l'autre 5.

Ainsi, la plaque est configurée de manière à former une boucle ouverte (en l'état non connectée ou non complétée) avec deux extrémités 4 et 5 libres (avant connexion).

La plaque 2 présente ainsi une seule spire (ou boucle) 2s pouvant avoir plusieurs largeurs. Ces extrémités 4, 5 sont destinées à connecter électriquement un module de carte à puce de type classique comportant une puce radiofréquence dont seul l'emplacement 12 est illustré.

Ces extrémités peuvent aussi interconnecter des spires d'antenne complémentaires comme décrit ultérieurement.

En effet, selon une autre caractéristique de ce premier mode, le procédé comprend une étape de formation d'au moins une spire d'antenne ou circuit d'antenne (pouvant comprendre résistance, capacité, plages d'interconnexion, bobines ...) prolongeant ou complétant au moins ladite boucle 2s.

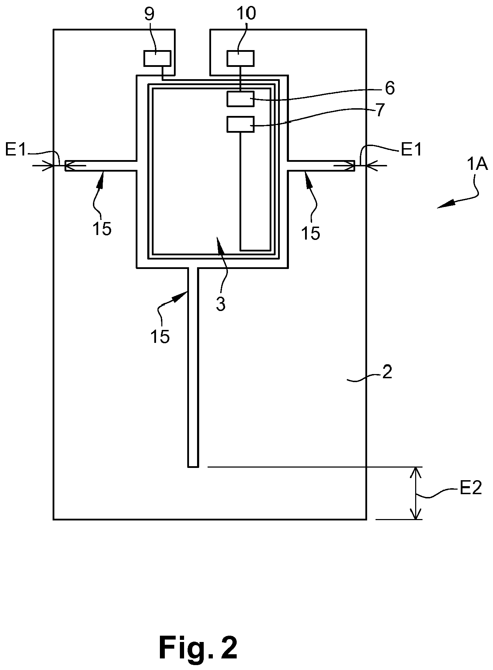

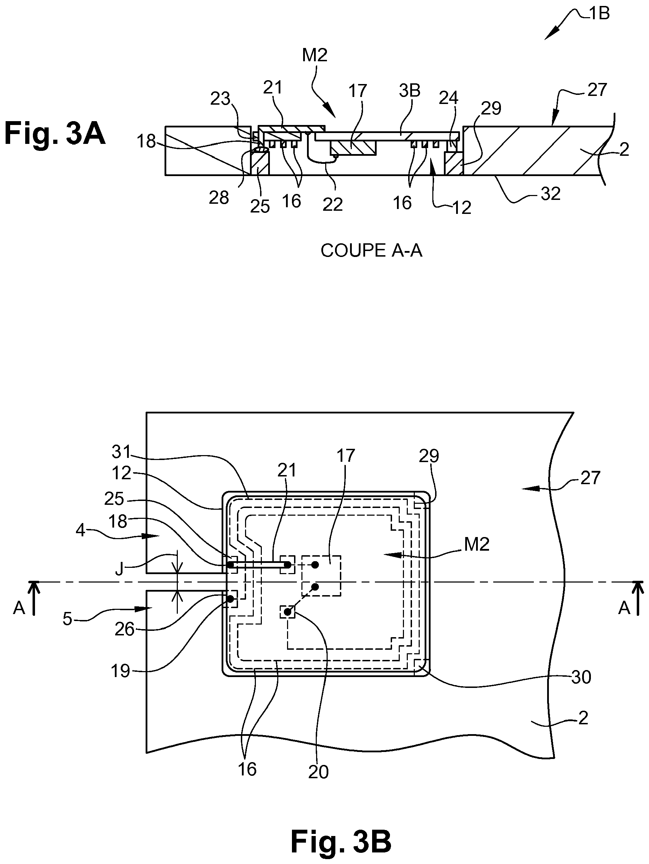

Pour cela, l'invention prévoit au moins deux modes de réalisation (figs. 1 ou 2) ou (fig. 3B). A la fig. 1 ou 2, un circuit d'antenne complémentaire « CC1 » (comprenant tout ou partie des éléments 8, 6, 7, 9, 10 : fig. 1) peut être réalisé sur un substrat étendu de couverture 3 du corps de l'insert ; A la figure 3B un circuit d'antenne complémentaire « CC2 » (comprenant tout ou partie des éléments 16, 18, 19, 20, 17 : fig. 3B) peut être réalisé sur un substrat 3B de module, dont l'étendue (ou la surface) est plus réduite car correspondant uniquement à la surface de l'ouverture 11 ou de la cavité 12.

Ensuite, le circuit d'antenne CC1 ou CC2 est connecté à la boucle 2s de la plaque métallique 2 afin de la prolonger par contact ohmique et/ou capacitif.

A la figure 1, le circuit d'antenne peut être réalisé sur un substrat 3 qui recouvre ou supporte ensuite toute la plaque 2.

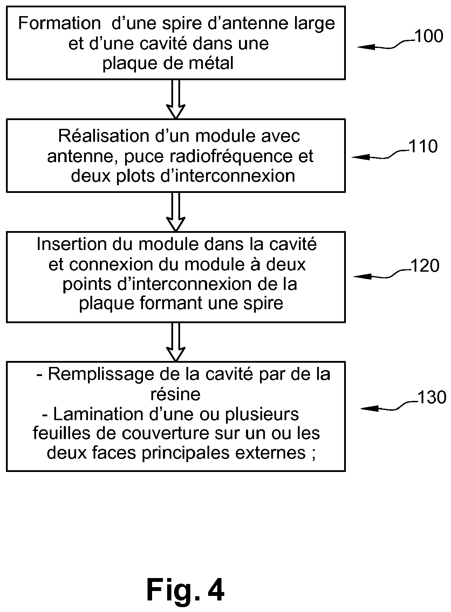

Alternativement (décrit ultérieurement), à la figure 4A, 4B, le circuit d'antenne complémentaire (comprenant les spires d'antenne 16) peut être réalisé sur un substrat isolant métallisé (ou lead frame) 3B formant un module M2 qui est ensuite encarté dans une ouverture 11, ou du moins une cavité 12.

Selon une autre caractéristique, le procédé de l'invention peut prévoir de connecter le module M2 susvisé par l'intermédiaire d'une connexion capacitive et/ou ohmique (ex. par contact ou soudure électrique) dudit module radiofréquence aux extrémités terminales de ladite boucle d'antenne.

Différentes manières d'effectuer cette connexion du module sont décrites ci-après. Une première manière décrite ultérieurement (figures 4A, 4B), peut-être de réaliser des plages d'interconnexion (25, 26) sur la plaque de métal Alternativement, des plages d'interconnexion 6, 7 peuvent être réalisées au moins en partie ou en totalité en dehors de la plaque 2, notamment sur un substrat 3.

A la figure 1, ces plages 6, 7 sont réalisées sur un substrat isolant 3 en matière plastique notamment en PVC ou autre (PC, PET...) et qui peut être de préférence préalablement assemblé à la plaque 2, sans être une obligation.

De préférence, le procédé réalise sur le substrat 3 un circuit complémentaire comprenant au moins une ou plusieurs spire(s) 8 d'antenne qui prolonge(nt) ou complètent naturellement la boucle 2s de la plaque 2.

Selon une caractéristique, au moins une spire d'antenne peut être formée sur une feuille isolante 3 assemblée ou destinée à être assemblée à ladite plaque de métal 2p.

Les spires 8 peuvent être réalisées par incrustation de fil conducteur avec un point de départ 9 proche d'une extrémité 5 de la boucle 2s et un point d'arrivée 10 proche de l'autre extrémité 4. Les spires 8 peuvent former, après quelques tours ou boucles, une plage d'interconnexion de module 7 sur le substrat 3 de manière connue, par exemple en formant des zigzags 7 de fil incrusté.

L'autre extrémité 4 de la boucle 2 est connectée par un point de connexion 10 directement à une plage d'interconnexion 6 (réalisé comme pour 7 sur le substrat), via un pont filaire isolé (ou gainé) 13.

Alternativement, le circuit antenne complémentaire « CC1 » et les plages d'interconnexion au module, peut être réalisées par gravure électrochimique ou autre procédé connu tel que jet de matière conductrice, etc.

Les connexions des plages 6, 7 aux points 9 ou 10 peuvent être effectuées par thermocompression, fil soudé. Le cas échéant les zones comprenant les points de connexion 9, 10 peuvent être amincies elles-mêmes et sur le passage des fils ou ponts conducteurs 13 ou au niveau des soudures sur la plaque 2p ou pour éviter des surépaisseurs au niveau de la plaque de métal.

De manière avantageuse, contrairement à ce qui est illustré à la figure 1, tout le circuit d'antenne avec les plages de connexion 9, 10, les spires 8, les plages d'interconnexion de module peuvent être réalisées d'abord sur le substrat 3, avant le report de la plaque métallique 2p par-dessus, puis la plaque métallique 2p est reportée sur la feuille 3 et le circuit d'antenne 8, de manière à connecter les points de connexion 9 et 10 de l'antenne aux extrémités 4 et 5 respectivement. (Les points 9 et 10 peuvent être de préférence en dessous des extrémités 4 et 5 contrairement à l'illustration de la figure 1 s'ils sont réalisés sur le substrat 3)

A cet effet, le procédé peut prévoir de placer une matière conductrice liante, sous forme de film (ACF) ou de pâte anisotropique (ACP) entre les extrémités 4, 5 et les points de connexion de l'antenne disposés sur le substrat ou une autre colle conductrice. La connexion peut aussi s'effectuer par simple contact électrique.

L'insert 1A ainsi formé peut recevoir un module radiofréquence purement sans-contact connecté aux plages 6 et 7, une résine de remplissage pour combler la fente J et/ou l'ouverture 11 autour du module ou éventuellement aussi par-dessus le module, avant de recevoir une ou plusieurs feuille(s) de couverture par laminage d'un côté opposé à la feuille 3 ou des deux côtés opposés.

Le cas échéant, l'insert peut ne pas recevoir de feuille de couverture, l'épaisseur de la plaque de de métal correspondant à l'épaisseur standardisée de carte à puce.

Alternativement, pour un module de type hybride, (contacts et sans contact), l'invention peut prévoir de remplir la cavité et la fente J d'une résine plastique ou thermoplastique ou matière polymérisant aux ultraviolets, puis de recouvrir l'insert d'au moins une ou plusieurs feuille(s) de couverture et/ou de finition, au moins du côté de l'ouverture 11 (opposée au substrat)ou sur les deux côtés.

Le procédé peut prévoir d'usiner une cavité 8 de réception de module jusqu'à mettre à jour les plages d'interconnexion 6 et 7. Puis, le module hybride (non illustré) peut être encarté de manière classique et connecté aux plages d'interconnexion 6 et 7 en même temps.

Alternativement, (non illustré) le module M peut être un module avec antenne et puce radiofréquence ; Ce module M peut être configuré de manière à former un module antenne pour antenne booster (ou relais) formée par la boucle unique 2s de la plaque 2p et le complément de circuit d'antenne (CC1, 8). Par exemple, les spires 8 peuvent être couplées inductivement avec des spires du module M.

Un complément de condensateur pour former un circuit RLC (booster ou relais) peut être réalisé par des croisements de fil d'antenne 8 sur le parcours des spires 8 dans l'ouverture 11.

Alternativement, une plaque de condensateur (ou métallisation) 14 peut être formée en regard des plages 6 et 7 sur la face du substrat opposée à celle portant les plages 6 et 7. Ces plages 6 et 7 peuvent donc assurer un rôle de condensateur en étant associées à une surface métallisée 14 disposée en regard.

L'étendue des plaques de condensateur et leur placement pour former un circuit RLC est connu de l'homme de l'art.

On peut remarquer que la plaque métallique 2p (ou boucle 2s) appartient à une spirale (ou bobine) d'antenne fermée (2s, 8) composée de la boucle 2s complétée par d'autres spires 8. On observe que la spirale (2s avec 8) est fermée au niveau de la fente J par les spires 8.

L'objet de la figure 2 est identique à celui de la figure 1 à l'exception de l'ajout d'au moins une fente 15 débouchant dans l'ouverture 15. La boucle 2s d'antenne de plaque comprend au moins une fente 15 formée dans la plaque métallique ; La fente 15 débouche dans l'ouverture 11 de plaque et s'étend que partiellement sur la largeur de la boucle 2s sans déboucher au-delà de la périphérie de la plaque 2p.

La fente 15 est réductrice de la largeur ou de la section de la boucle, et se maintient en retrait du bord périphérique de la plaque ou de la boucle).

Cette fente 15 (ou plusieurs fentes 15 disposées perpendiculairement à chaque bord de la plaque) parait permettre une meilleure canalisation du courant et concentration du flux du courant vers l'extérieur de la plaque. Un passage de courant induit (ou une section de plaque) d'une épaisseur E1 ou E2 est maintenu en bordure de la plaque. Les fentes 15 permettent aussi de « tuner » ou ajuster le circuit d'antenne sur le fil (ou boucle 2s) dont la section correspond à la section de la plaque, en modifiant ses propriétés RLC. Selon la forme des fentes (longueur et largeur), il est possible de créer une valeur de capacité par les faces internes en regard de chaque fente 15.

Sans que l'on puisse vraiment l'expliquer, cette configuration de fentes, avec des fentes 15 qui s'étendent que partiellement sur la largeur de la boucle formée dans la plaque métallique, ont permis de meilleurs résultats de performance électromagnétiques.

Aux figures 3A, 3B, est illustré un troisième insert de carte à puce en cours de réalisation conformément à un troisième mode préféré de réalisation l'invention. Il est décrit en relation avec les étapes décrites figure 4.

Comme précédemment, le procédé comprend les étapes ci-après. - A l'étape 100, une formation d'une spire d'antenne large 2s et d'une cavité (ou ouverture) 12 dans une plaque de métal 2p; La référence 2 équivaut indifféremment à une plaque métallique 2p et/ou une boucle (ou spire) 2s associée ou appartenant à un circuit d'antenne CC1 ou CC2 comprenant la bobine 8 ou 16.

La plaque peut être sensiblement comme celle de la figure 1, à la différence que l'ouverture 3 peut être plus réduite en surface et peut correspondre ou pas à la surface ou encombrement d'un module de carte à puce standard avec une antenne portée dessus ;
La plaque comprend ici (à la place de l'ouverture 11, une cavité 12 de module M2. La cavité 12 peut former un plan P1 de réception du module, à l'aide de deux épaulements 25, 26 d'interconnexion disposés dedans en prolongement des extrémités 4, 5 de connexion de la boucle 2s. Les épaulements 25, 26 présentent ici chacun une face supérieure d'interconnexion située en-dessous de la face principale 27 de la plaque métallique et au niveau d'un plan P1 de la cavité 12.

Le plan P1 peut être conforté par deux autres épaulements 29, 30 placés ici dans les angles de la cavité 12. Ces épaulements 29, 30 forment avec les épaulements 25, 26 quatre points d'appui ou support du module M2. Le module M2 peut être affleurant par rapport à la surface 27 de la plaque métallique 2p.

Ce mode de réalisation a notamment l'avantage d'avoir un maximum de métal aussi bien en surface principale qu'en épaisseur de plaque.

La boucle 2s fait ici partie d'une spirale fermée au niveau de la fente J par la spire externe 31 à l'entrée de la cavité 12 de réception de module M2.

Alternativement, le module M2 (ou spirale 16) peut constituer avec la boucle 2s une antenne relais, la puce pouvant être remplacée par une puce de condensateur d'accord en fréquence. La puce formant condensateur peut aussi être remplacée par un condensateur sous forme de plaques superposées notamment de part et d'autre du substrat isolant 3B. L'avantage d'un condensateur sous forme de circuit intégré ou composant monté en surface (CMS) est de réduire l'encombrement métallique dans la cavité 12.

Le cas échéant, le module M2 peut comporter des plages de contact affleurant par rapport la surface 27 (ou en surface externe) une fois la face 27 de la plaque recouverte de feuille de finition et/ou de couverture, la puce étant de type hybride (à contacts et sans-contact).

Le cas échéant aussi, l'assemblage 1B (du module et de la boucle 2s) peut comporter un module supplémentaire à antenne radiofréquence M3 (non illustré), introduit par la face 32 opposée à la face 27 (les épaulements 25, 26, 29, 30 peuvent être usinés en dessous pour former un plan P2 accessible par la face arrière 32).

Ce module à antenne M3 peut être configuré de manière à être couplé (et boosté, amplifié) par l'antenne relais décrite ci-dessus (comprenant la boucle 2s, complétée par les spires de module 16 et éventuellement d'un condensateur à la place de la puce radiofréquence 17).

L'invention peut permettre d'effectuer un encartage standard de module M2 à puce 17 et à antenne 16 sur un plan P1 réalisé de manière standard dans l'épaisseur de la plaque 2. La boucle métallique 2s peut ainsi être prolongée en ses extrémités 4 et 5 par l'antenne 16 d'un module antenne de type standard communément utilisé dans l'industrie de la carte à puce avec deux extrémités de l'antenne 16 qui se connectent à celles 4 et 5 de la boucle 2s.
- A l'étape 110, le procédé prévoit une réalisation d'un module M2 avec substrat isolant 3B (notamment en polyimide) antenne ici gravée 16, puce radiofréquence 17 et deux plots d'interconnexion 18, 19 pour connecter la boucle 2s; Comme indiqué, la surface du module M2 peut correspondre à celle d'un module standard (environ 1,5 x 1,5 cm) ; Les spires sont ici réalisées de manière classique du côté caché du module qui porte aussi la puce radiofréquence 17.

Un plot de puce connecte par fil soudé une extrémité interne de l'antenne 16 via une métallisation 20, tandis que l'autre plot de la puce connecte par fil soudé 22 un pont conducteur 21 (sur face externe du substrat ou film) à travers un trou dans le substrat ou film 3B. Le pont passe au-dessus des spires 16 et traverse le substrat 3B à l'aide d'un trou métallisé 23.

La puce peut être aussi connectée autrement en étant retournée (technique flip-chip)

A l'étape 120, le procédé comprend une étape d'insertion du module M2 dans la cavité 12 et de connexion du module à deux points d'interconnexion 25, 26 de la plaque 2 formant une spire 2s.

A cet effet, sur chacune des faces supérieures d'épaulement (ou épaulement d'interconnexion) 25, 26 est disposée une goutte de colle conductrice 28 (ou une brasure) pour connecter les épaulements 25, 26 (extrémités de boucle) aux extrémités d'interconnexion 18, 19 de la spirale (ou bobine) d'antenne du module M2 ;
- Sur les autres épaulements uniquement supports 29, 30 peut être disposé un adhésif simple 24 pour fixer le module.

Alternativement, la connexion du module M2 à la boucle 2s peut s'effectuer de manière capacitive en disposant un isolant entre au moins un épaulement d'interconnexion 25 ou les deux épaulements 25, 26 et les extrémités terminales 18, 19 de la spirale 16.

Alternativement, un épaulement d'interconnexion 25 peut être connecté en ohmique avec la plage d'interconnexion 18 de l'antenne 16 tandis que l'autre épaulement 26 peut être connecté par connexion ohmique.

Les surfaces capacitives peuvent être adaptées, configurées selon le besoin d'accord en fréquence du circuit d'antenne 8, 16.

A l'étape 130, le procédé peut prévoit un remplissage de la cavité par de la résine plastique ou thermoplastique ou matière polymérisable aux ultraviolets UV ou autre matière de remplissage isolante du côté de la face inférieure 32;

Puis, elle peut prévoir une étape de laminage d'une ou plusieurs feuilles de couverture sur un ou les deux faces principales externes pour former un insert de carte à puce et/ou une carte à puce.

Le procédé de l'invention quel que soit le mode, peut être réalisé sur des plaques grand formats comportant une pluralité d'emplacement de carte à puce et qui sont découpées ensuite au format standard des cartes à puce ou sur des plaques déjà au format carte à puce standard.

La fente J peut être très réduite, par exemple à 1 mm

De même, les parties d'extrémités 4 et 5 de la plaque peuvent être formée ou se chevaucher de manière à s'imbriquer à la manière d'une spire d'antenne pour ne pas laisser de passage J ou de matière isolante perpendiculairement au bord transversal de la plaque jusqu'à l'ouverture 11 ou 12 (fig. 3B).

L'invention permet de réaliser des cartes avec l'insert et qui peuvent avoir des bords ou tranches métalliques. Le cas échéant, il n'est pas exclu de noyer totalement les plaques de métal entre des feuilles isolantes, même sur leur bords périphériques.

Dans tous les exemples, la plaque du corps de carte peut comprendre un assemblage de plaques métalliques soudées ensemble ou assemblées par l'intermédiaire d'une couche fine adhésive. Ce dernier assemblage peut améliorer la tenue mécanique de flexion / torsion.

## Revendications

1. Procédé de fabrication d'un insert métallique (1A, 1B) pour carte à puce radiofréquence, ledit procédé comprenant les étapes de :
- fourniture d'au moins une plaque de métal (2, 2p) découpée en forme de boucle (2S) d'antenne et présentant une ouverture (11, 12) dans une zone de réception d'un module radiofréquence (M1, M2),
**caractérisé en ce qu'**il comprend les étapes suivantes :
- réalisation de deux extrémités terminales d'interconnexion (4, 5, 18, 19) dans ladite plaque (2) configurées pour connecter un module radiofréquence (M1, M2) ou un circuit d'antenne complémentaire (8, 16),
- connexion capacitive et/ou ohmique dudit module radiofréquence (M1, M2) aux extrémités terminales de ladite boucle d'antenne.

2. Procédé selon la revendication précédente, **caractérisé en ce qu'**elle comprend une étape de formation d'au moins une spire d'antenne (8, 16) prolongeant au moins ladite boucle (2s) .

3. Procédé selon l'une des revendications précédentes, **caractérisé en ce que** ladite au moins une spire (16) est formée sur un substrat (3B) de module (M2) à puce radiofréquence standard de carte à puce.

4. Procédé selon l'une des revendications précédentes, **caractérisé en ce que** ladite au moins une spire (8) est formée sur une feuille isolante (3) assemblée à ladite plaque de métal.

5. Procédé selon l'une des revendications précédentes, **caractérisé en ce qu'**un module (M1, M2) de carte à puce radiofréquence est encarté dans une cavité (12) ménagée au-dessus ou en regard d'au moins une partie du circuit d'antenne complémentaire (8) pour être connecté de manière ohmique, capacitive, ou inductive à l'antenne complémentaire (8, 16).

6. Procédé selon l'une des revendications précédentes, **caractérisé en ce que** ladite boucle (2s) d'antenne de plaque comprend au moins une fente (15) formée dans la plaque métallique, débouchant dans l'ouverture (11) de plaque et s'étendant que partiellement sur la largeur de la boucle (2s) sans déboucher au-delà de la périphérie de la plaque (2p).

7. Insert métallique (1A, 1B) pour carte à puce radiofréquence, comprenant:
- au moins une plaque de métal (2, 2p) en forme de boucle d'antenne et présentant une ouverture (11, 12) dans une zone de réception d'un module radiofréquence (M1, M2),
**caractérisé en ce qu'**il comprend:
- deux extrémités terminales d'interconnexion (4, 5, 18, 19) réalisées dans ladite plaque (2) configurées pour connecter ou connectant un module radiofréquence (M1, M2) ou un circuit d'antenne complémentaire (8, 16) par connexion capacitive et/ou ohmique.

8. Insert selon la revendication précédente, **caractérisé en ce qu'**il comprend au moins une spire d'antenne (8, 16) prolongeant au moins ladite boucle (2s).

9. Insert selon l'une des revendications 7 à 8, **caractérisé en ce que** ladite au moins une spire (16) est formée sur un substrat (3B) de module (M2) à puce radiofréquence standard de carte à puce ou sur une feuille isolante (3) assemblée à ladite plaque de métal.

10. Insert selon l'une des revendications 7 à 9, **caractérisé en ce qu'**il comprend un module (M1, M2) de carte à puce radiofréquence encarté dans une cavité (12) ménagée au-dessus ou en regard d'au moins une partie du circuit d'antenne complémentaire (8) et est connecté de manière ohmique, capacitive, ou inductive à l'antenne complémentaire (8, 16).

11. Insert selon l'une des revendications 7 à 10, **caractérisé en ce qu'**il comprend ladite boucle (2s) d'antenne de plaque comprend au moins une fente (15) formée dans la plaque métallique, débouchant dans l'ouverture (11) de plaque et s'étendant que partiellement sur la largeur de la boucle (2s) sans déboucher au-delà de la périphérie de la plaque (2p).

12. Carte à puce comportant l'insert selon la revendication précédente, **caractérisée en ce que** l'insert est assemblé à une ou plusieurs feuilles polymère de couverture ou de décoration.
